# EUROPÄISCHE PATENTSCHRIFT

(11) **EP 3 074 180 B1**
(45) Veröffentlichungstag und Bekanntmachung des Hinweises auf die Patenterteilung: **31.01.2018**
(21) Anmeldenummer: 14805872.0
(22) Anmeldetag: 28.11.2014
(51) Int. Cl.: C01B 32/55

(54) **VORRICHTUNG ZUR HERSTELLUNG VON CO2-PELLETS AUS CO2-SCHNEE UND REINIGUNGSVORRICHTUNG**
APPARATUS FOR PRODUCING CO2 PELLETS FROM CO2 SNOW AND CLEANING DEVICE
DISPOSITIF POUR FABRIQUER DES PELLETS DE CO2 À PARTIR DE NEIGE CARBONIQUE ET APPAREIL DE NETTOYAGE

(30) Priorität: 29.11.2013 DE 102013113275
(43) Veröffentlichungstag der Anmeldung: 05.10.2016
(73) Patentinhaber: Alfred Kärcher GmbH & Co. KG, 71364 Winnenden (DE)
(72) Erfinder: DEMIRTAS, Yunus, 70806 Kornwestheim (DE); PLACHKE, Dieter, 71364 Winnenden (DE); KRUNER, Andreas, 70734 Fellbach (DE); WELLER, Markus, 71522 Backnang (DE); KRAUTER, Andreas, 71711 Steinheim (DE); KLINK, Rene, 73553 Alfdorf-Buchengehren (DE)
(74) Vertreter: Hoeger, Stellrecht & Partner Patentanwälte mbB
(86) Internationale Anmeldenummer: PCT/EP2014/075941
(87) Internationale Veröffentlichungsnummer: WO 2015/079022

(56) Entgegenhaltungen:
- EP-A1- 0 405 203
- EP-A1- 0 429 698
- DE-A1- 2 106 477
- US-A- 3 670 516

## Beschreibung

Die vorliegende Erfindung betrifft eine Vorrichtung zur Herstellung von CO₂-Pellets aus CO₂-Schnee, insbesondere für ein Reinigungsgerät zum Bestrahlen von zu behandelnden Oberflächen mit einem Gemischstrom aus einem Druckgas und CO₂-Pellets, umfassend eine Verdichtungseinrichtung zum Verdichten von CO₂-Schnee zur Ausbildung von CO₂-Pellets, wobei die Verdichtungseinrichtung einen Zahnradverdichter umfasst, der Zahnradverdichter mindestens ein um eine erste Drehachse rotierbar gelagertes Verdichterrad mit einer Mehrzahl von Verdichtungselementen und mindestens ein mit dem mindestens einen Verdichterrad zusammenwirkendes, um eine zweite Drehachse rotierbar gelagertes Aufnahmerad mit einer Mehrzahl von korrespondierend zu den Verdichtungselementen ausgebildeten Schneeaufnahmen zum Aufnehmen von CO₂-Schnee umfasst, wobei das Aufnahmerad eine Aufnahmeradhülse mit einer Aufnahmeradhülsenwand umfasst, wobei die Schneeaufnahmen in der Aufnahmeradhülsenwand angeordnet oder ausgebildet sind und wobei die Schneeaufnahmen in Form von in radialer Richtung geöffneten Vertiefungen ausgebildet sind.

Ferner betrifft die vorliegende Erfindung ein Reinigungsgerät zum Bestrahlen von zu behandelnden Oberflächen mit einem Gemischstrom aus einem Druckgas und CO₂-Pellets.

Aus der DE 10 2008 036 331 B3 ist eine Strahleinrichtung zum Bestrahlen von zu behandelnden Oberflächen mit einem Gemischstrom aus einem Druckgas und Trockeneis-Pellets bekannt. Diese umfasst einen Schneckenförderer, welcher CO₂-Schnee durch eine Matrize drückt, um so CO₂-Pellets herzustellen. Verdichtungseinrichtungen in Form von Zahnradverdichtern sind beispielsweise aus der DE 21 06 477 B2 und der EP 0 429 698 A1 bekannt. In der US 3,670,516 ist eine Maschine zum Erzeugen von Trockeneispellets beschrieben. Und in der EP 0 405 203 A1 ist ein Verfahren zur Herstellung von Kohlendioxid-Granulat offenbart.

Ein Nachteil der bekannten Strahleinrichtungen ist insbesondere, dass mit der genutzten Verdichtungseinrichtung nur ein sehr inhomogenes Gemisch aus unterschiedlich großen CO₂-Pellets hergestellt werden kann.

Es ist daher eine Aufgabe der vorliegenden Erfindung, die Funktionsweise einer Vorrichtung und eines Reinigungsgeräts der eingangs beschriebenen Art zu verbessern.

Diese Aufgabe wir bei einer Vorrichtung der eingangs beschriebenen Art erfindungsgemäß dadurch gelöst, dass ein von der Aufnahmeradhülse ausgebildeter Innenraum zum Aufnehmen der CO₂-Pellets ausgebildet ist.

Anders als bei einer Verdichtungseinrichtung umfassend einen Schneckenförderer und eine Matrize ermöglicht es ein Zahnradverdichter, insbesondere abhängig von der Ausgestaltung der zur Verdichtung genutzten Bauteile, insbesondere zusammenwirkende Zahnräder, CO₂-Pellets herzustellen, die im Wesentlichen alle gleich groß sind. Eine sehr homogene Verteilung von CO₂-Pellets hat insbesondere in Verbindung mit dem Einsatz bei einem Reinigungsgerät den Vorteil, dass die durch einen Druckgasstrom beschleunigten CO₂-Pellets auch alle im Wesentlichen dieselbe Energie aufweisen, so dass eine relativ homogene Energieverteilung im Gemischstrom erreicht wird. Bei einem CO₂-Pellet-Gemisch mit einer eher homogenen Größenverteilung der CO₂-Pellets im Vergleich zu einer eher inhomogenen Größenverteilung ist daher die Reinigungseffizienz deutlich verbessert. Zudem lässt sie sich eine Reinigungskraft deutlich besser einstellen, beispielsweise über den Druck im Druckgasstrom. Vorteilhaft ist es, dass der Zahnradverdichter mindestens ein um eine erste Drehachse rotierbar gelagertes Verdichterrad mit einer Mehrzahl von Verdichtungselementen und mindestens ein mit dem mindestens einen Verdichterrad zusammenwirkendes, um eine zweite Drehachse rotierbar gelagertes Aufnahmerad mit einer Mehrzahl von korrespondierend zu den Verdichtungselementen ausgebildeten Schneeaufnahmen zum Aufnehmen von CO₂-Schnee umfasst. Das Aufnahmerad ermöglicht es insbesondere, CO₂-Schnee in die Schneeaufnahmen aufzunehmen und durch die mit den Schneeaufnahmen zusammenwirkenden Verdichtungselemente zur Ausbildung von CO₂-Pellets zu verdichten. Beispielsweise können das Verdichterrad und das Aufnahmerad in Form von Zahnrädern ausgebildet sein, deren Zähne ineinandergreifen. Die Zahnform kann insbesondere derart optimiert werden, dass die so ausgebildeten Pellets die für die Anwendung gewünschte Größe und Konsistenz aufweisen. Die Schneeaufnahmen bilden also quasi Formen in die der CO₂-Schnee durch die Verdichtungselemente hineingepresst wird. Insbesondere können der CO₂-Schnee aufgrund der Schwerkraft zwischen die zusammenwirkenden Schneeaufnahmen und Verdichtungselemente eingebracht werden und die erzeugten CO₂-Pellets aufgrund der Schwerkraft aus den Schneeaufnahmen wieder herausfallen. Um das Freigeben der CO₂-Pellets aus den Schneeaufnahmen zu erleichtern, können sowohl das mindestens eine Verdichterrad als auch das mindestens eine Aufnahmerad mit einer Antihaftbeschichtung versehen sein, beispielsweise aus Polytetrafluorethylen (PTFE). Günstigerweise sind die Schneeaufnahmen in Form von in radialer Richtung geöffneten Vertiefungen ausgebildet. Diese Ausgestaltung ermöglicht es auf einfache Weise, CO₂-Schnee in die Schneeaufnahmen einzubringen und mit den Verdichtungselementen zu verdichten. Vorzugsweise sind die Vertiefungen korrespondierend zu den Verdichtungselementen ausgebildet, und zwar insbesondere derart, dass ein Verdichtungselement an die Form einer Schneeaufnahme angepasst ist, um darin aufgenommenen CO₂-Schnee zu einem CO₂-Pellet definierter Größe und Konsistenz zu komprimieren. Ferner ist es günstig, dass das Aufnahmerad eine Aufnahmeradhülse mit einer Aufnahmeradhülsenwand umfasst und dass die Schneeaufnahmen in der Aufnahmeradhülsenwand angeordnet oder ausgebildet sind. Durch diese Ausgestaltung kann der Zahnradverdichter besonders leicht, also mit geringem Gewicht, ausgeführt werden. Zudem ermöglicht es ein von der Aufnahmeradhülse ausgebildeter Innenraum, bei entsprechender Ausgestaltung der Schneeaufnahmen hergestellte CO₂-Pellets aufzunehmen. Insgesamt lässt sich eine wie beschrieben ausgebildete Vorrichtung zur Herstellung von CO₂-Pellets aus CO₂-Schnee sehr kompakt ausbilden, da die CO₂-Pellets im Innenraum der Aufnahmeradhülse aufgenommen werden können und so kein zusätzlicher Sammelbehälter für die CO₂-Pellets erforderlich ist.

Günstigerweise sind die Verdichtungselemente in Form von in radialer Richtung vom Verdichterrad abstehenden Zähnen ausgebildet. Beispielsweise können hierfür konventionelle Zahnräder zur Ausbildung des Verdichterrads genutzt werden. Beispielsweise können auch zwei oder mehr Verdichterräder zum Einsatz kommen. Insbesondere können deren Zähne in Umfangsrichtung versetzt zueinander angeordnet sein, sodass Zähne benachbarter Zahnräder auf Höhe der Zahnzwischenräume angeordnet sind.

Vorteilhaft ist es, wenn die Vorrichtung zwei oder mehr Verdichterräder umfasst, die in Umfangsrichtung versetzt angeordnet sind, so dass Verdichtungselementzwischenräume sowohl in Umfangsrichtung als auch in axialer Richtung durch Verdichtungselemente begrenzt sind. Durch diese Anordnung können insbesondere allseits begrenzte Schneeaufnahmen ausgebildet werden, so dass Abmessungen der CO₂-Pellets in allen drei Raumrichtungen durch die Dimensionierung des mindestens einen Verdichterrads und/oder des mindestens einen Aufnahmerads vorgegeben werden können.

Besonders einfach werden der Aufbau und die Herstellung der Vorrichtung, wenn das mindestens eine Verdichterrad und das mindestens eine Aufnahmerad identisch oder im Wesentlichen identisch ausgebildet sind. Beispielsweise können das mindestens eine Verdichterrad und das mindestens eine Aufnahmerad in Form identischer Zahnräder ausgebildet sein, wobei jeweils Zahnzwischenräume zwischen Verdichtungselemente ausbildenden Zähnen der Zahnräder Schneeaufnahmen ausbilden. Zudem lässt sich so eine besonders kompakte Vorrichtung zur Herstellung von CO₂-Pellets aus CO₂-Schnee ausbilden.

Der Aufbau der Vorrichtung vereinfacht sich weiter, wenn die erste und die zweite Drehachse parallel oder im Wesentlichen parallel zueinander verlaufen. Günstig ist es ferner, wenn die Mehrzahl von Schneeaufnahmen in Form von Zwischenräumen ausgebildet ist, die zwischen der Mehrzahl von Verdichtungselementen angeordnet oder ausgebildet sind. Dies ermöglicht es, an einem Rad des Zahnradverdichters ausgebildete oder angeordnete Zähne als Verdichtungselemente im Zusammenwirken mit Schneeaufnahmen am anderen Rad zu verwenden, die zwischen Zähnen desselben ausgebildet sind.

Gemäß einer weiteren bevorzugten Ausführungsform der Erfindung kann vorgesehen sein, dass die Vorrichtung eine Extrudiereinrichtung zum Extrudieren von CO₂-Pellets umfasst. Mit der Extrudiereinrichtung lassen sich CO₂-Pellets mit einer definierten Querschnittsfläche herstellen. Die Extrudiereinrichtung kann insbesondere in Kombination mit dem Zahnradverdichter ausgebildet und/oder angeordnet sein.

Günstigerweise umfasst die Extrudiereinrichtung mindestens eine Extrusionsmatrize mit einer Mehrzahl von Durchbrechungen. So können gleichzeitig mehrere CO₂-Stränge zur Ausbildung von CO₂-Pellets erzeugt werden. Dabei ist es insbesondere vorteilhaft, wenn die mindestens eine Extrusionsmatrize drehbar angeordnet ist. Beispielsweise kann sie Teil des Verdichterrads und/ oder des Aufnahmerads sein. So lässt sich auf besonders einfache und kompakte Weise ein Zahnradverdichter mit Extrudiereinrichtung ausbilden. Die Extrusionsmatrize kann insbesondere am Verdichterrad und/oder am Aufnahmerad angeordnet oder ausgebildet sein, so dass CO₂-Pellets beispielsweise durch radiale Extrusion, insbesondere von außen nach innen in Richtung auf eine Drehachse des Verdichterrads beziehungsweise des Aufnahmerads hin, hergestellt werden können, indem CO₂-Schnee durch geeignet geformte Durchbrechungen hindurch komprimiert wird, die mit den Schneeaufnahmen in Fluidverbindung stehen. Die Extrusionsmatrize kann also insbesondere in das Verdichterrad und/oder das Aufnahmerad bildende, jeweils außen verzahnte Zahnräder integriert sein. Dies bedeutet insbesondere, dass die Durchbrechungen die Verdichtungselemente durchsetzen können, also beispielsweise Zähne der Zahnräder. Alternativ oder zusätzlich ist es auch möglich, dass Durchbrechungen vorgesehen sind, welche das Verdichterrad und/oder das Aufnahmerad zwischen benachbarten Verdichtungselementen durchsetzen und direkt in Schneeaufnahmen münden. Dies kann insbesondere dadurch realisiert werden, dass Durchbrechungen auf einer Außenseite des Verdichterrads oder des Aufnahmerads zwischen Zähnen enden.

Ferner ist es vorteilhaft, wenn jede der Mehrzahl von Durchbrechungen eine Längsachse definiert, die sich in radialer oder im Wesentlichen in radialer Richtung von der ersten oder zweiten Drehachse weg erstreckt. So lässt sich insbesondere eine zylindrische Extrusionsmatrize ausbilden. Durch die Anordnung der Durchbrechungen ist es möglich, dass die Verdichtungselemente CO₂-Schnee in den Schneeaufnahmen durch dafür vorgesehene Durchbrechungen hindurch pressen.

Vorzugsweise steht jede Schneeaufnahme mit mindestens einer Durchbrechung in Fluidverbindung. Dies ist insbesondere möglich, wenn die Durchbrechung in die Schneeaufnahme mündet oder wenn die Durchbrechung ein Verdichtungselement durchsetzt, welches Verdichtungselement mit einer Schneeaufnahme zusammenwirkt. Steht jede Schneeaufnahme mit genau einer Durchbrechung in Fluidverbindung, so kann durch das Zusammenwirken eines Verdichtungselements und einer Schneeaufnahme beim Ineinandergreifen derselben genau ein CO₂-Pellet gebildet werden. Die Anzahl der über den Umfang des Verdichterrads verteilten Verdichtungselemente sowie der über den Umfang verteilten Schneeaufnahmen des Aufnahmerads bestimmt somit die Zahl der pro Umdrehung von Verdichterrad beziehungsweise Aufnahmerad ausbildbaren CO₂-Pellets.

Vorteilhaft ist es, wenn das Verdichterrad eine Verdichterradhülse mit einer Verdichterradhülsenwand umfasst und wenn die Verdichtungselemente auf einer Außenseite der Verdichterradhülse angeordnet oder ausgebildet sind. Auf diese Weise kann der Zahnradverdichter besonders leicht, also mit geringem Gewicht, ausgebildet werden. Zudem kann ein von der Verdichterradhülse definierter Innenraum zur Aufnahme der hergestellten CO₂-Pellets dienen.

Für einen einfachen, automatischen Betrieb der Vorrichtung ist es günstig, wenn sie eine Antriebseinrichtung zum Antreiben des mindestens einen Verdichterrads und/oder des mindestens einen Aufnahmerads aufweist. Durch die Antriebseinrichtung können das mindestens eine Verdichterrad und/oder das mindestens eine Aufnahmerad angetrieben werden und optional auch CO₂-Schnee zwischen dieselben fördern. Der Antrieb kann insbesondere als externer Synchronantrieb ausgebildet werden, der sowohl das Verdichterrad als auch das Aufnahmerad antreibt, und zwar derart, dass die zusammenwirkenden Verdichtungselemente und Schneeaufnahmen einander nicht berühren, also ein möglichst definierter Spalt zwischen diesen ausgebildet wird.

Für eine kontinuierliche Erzeugung von CO₂-Pellets ist es günstig, wenn die Vorrichtung einen Speicherbehälter zum Aufnehmen und Speichern von CO₂-Schnee umfasst. Dieser ist vorzugsweise stromaufwärts des Zahnradverdichters angeordnet beziehungsweise ausgebildet.

Ferner ist es vorteilhaft, wenn die Vorrichtung einen CO₂-Anschluss zum Verbinden mit einem flüssiges CO₂ enthaltenden CO₂-Speicher oder einen flüssiges CO₂ enthaltenden CO₂-Speicher umfasst. Diese Ausgestaltung ermöglicht es, die Vorrichtung insbesondere in Verbindung mit einem mobilen Reinigungsgerät zu nutzen.

Darüber hinaus ist es günstig, wenn die Vorrichtung eine mit dem CO₂-Anschluss oder mit dem CO₂-Speicher in Fluidverbindung stehende Expansionseinrichtung zum Erzeugen von CO₂-Schnee aus flüssigem oder gasförmigem CO₂ umfasst. Auf diese Weise kann immer dann CO₂-Schnee erzeugt werden, wenn er zur Herstellung von CO₂-Pellets benötigt wird.

Günstigerweise umfasst die Expansionseinrichtung eine mit dem CO₂-Anschluss oder mit dem CO₂-Speicher in Fluidverbindung stehende Entspannungsdüse. Durch Expansion kann sich flüssiges oder gasförmiges CO₂ so weit abkühlen, dass CO₂-Schnee entsteht.

Vorteilhaft ist es, wenn die Vorrichtung eine Abstreifeinrichtung zum Abstreifen der ausgebildeten CO₂-Pellets von der Verdichtungseinrichtung umfasst. Insbesondere kann die Abstreifeinrichtung derart angeordnet oder ausgebildet sein, dass beispielsweise durch die Verdichtungseinrichtung ausgebildete CO₂-Stränge abgetrennt werden zur Ausbildung im Wesentlichen gleich langer CO₂-Pellets.

Günstig ist es ferner, wenn die Abstreifeinrichtung zum Abstreifen der ausgebildeten CO₂-Pellets von dem mindestens einen Verdichterrad und/oder von dem mindestens einen Aufnahmerad ausgebildet ist. Insbesondere kann die Abstreifeinrichtung derart angeordnet oder ausgebildet sein, dass durch die Extrudiereinrichtung extrudierte CO₂-Stränge abgetrennt werden zur Ausbildung im Wesentlichen gleich langer CO₂-Pellets.

Vorteilhaft ist es, wenn die Abstreifeinrichtung mindestens ein Abstreifelement umfasst, welches in einem von der Verdichterradhülse definierten Verdichterradhülseninnenraum oder in einem von der Aufnahmeradhülse definierten Aufnahmeradhülseninnenraum angeordnet oder ausgebildet ist oder in diese mindestens teilweise hineinragt. Diese Ausgestaltung ermöglicht es, mit dem mindestens einen Abstreifelement durch die Verdichterradhülse beziehungsweise die Aufnahmeradhülse hindurch extrudierte CO₂-Pellets durch Abstreifen eines extrudierten CO₂-Strangs auszubilden. Insbesondere kann das mindestens eine Abstreifelement rotierbar angeordnet oder ausgebildet sein, beispielsweise um eine Längsachse, welche parallel oder im Wesentlichen parallel zu einer Längsachse des Verdichterrads oder des Aufnahmerads verläuft.

Vorteilhaft ist es, wenn das mindestens eine Abstreifelement eine Abstreifkante umfasst, welche eine den Verdichterradhülseninnenraum begrenzende Verdichterradhülseninnenfläche der Verdichterradhülse berührt oder nahezu berührt oder eine den Aufnahmeradhülseninnenraum begrenzende Aufnahmeradhülseninnenfläche der Aufnahmeradhülse berührt oder nahezu berührt. Mit einer solchen Abstreifkante können CO₂-Pellets, die beispielsweise durch eine Durchbrechung der Verdichterradhülse oder der Aufnahmeradhülse hindurch extrudiert werden, auf einfache und sichere Weise abgestreift werden. Je nach Positionierung des Abstreifelements beziehungsweise der Abstreifkante desselben kann so die Länge der herzustellenden CO₂-Pellets eingestellt werden.

Günstig ist es, wenn die Verdichtungseinrichtung einen Pelletauslass aufweist, welcher insbesondere entweder parallel zur ersten oder zweiten Drehachse ausgerichtet ist oder quer, insbesondere senkrecht, zur ersten oder zweiten Drehachse. Die erste Ausrichtung des Pelletauslasses ist insbesondere dann vorteilhaft, wenn die Vorrichtung eine Extrudiereinrichtung umfasst. Werden die CO₂-Pellets durch das mindestens eine Verdichterrad und das mit diesem zusammenwirkende mindestens ein Aufnahmerad ausgebildet, ist die Anordnung beziehungsweise Ausrichtung des Pelletauslasses quer zur ersten oder zweiten Drehachse besonders günstig.

Um möglichst alle hergestellten Pellets weiter nutzen zu können, ist es günstig, wenn der Pelletauslass zwischen der ersten und der zweiten Drehachse angeordnet oder ausgebildet ist. Diese Ausgestaltung ist insbesondere dann vorteilhaft, wenn die Vorrichtung keine Extrudiereinrichtung aufweist.

Gemäß einer weiteren bevorzugten Ausführungsform der Erfindung kann vorgesehen sein, dass der Pelletauslass mit einem CO₂-Pellet-Zwischenspeicher zum Zwischenspeichern der erzeugten CO₂-Pellets oder einer Übergabeeinrichtung zum Übergeben der CO₂-Pellets in eine CO₂-Pellet-Beschleunigungseinrichtung zum Beschleunigen derselben direkt oder indirekt in Fluidverbindung steht. Diese Ausgestaltung beziehungsweise Anordnung des CO₂-Pellet-Zwischenspeichers ermöglicht es, sowohl bei einem diskontinuierlichen Herstellvorgang der CO₂-Pellets als auch bei einem diskontinuierlichen Strahlvorgang mit den CO₂-Pellets stets genügend CO₂-Pellets verfügbar zu halten.

Günstig ist es, wenn die Vorrichtung eine Drucktrenneinrichtung zur Ausbildung einer Druckstufe zwischen der Expansionseinrichtung und dem Pelletauslass aufweist. Beispielsweise können im Bereich der Drucktrenneinrichtung Drucke deutlich höher als Atmosphärendruck herrschen, um durch Expansion des Gases CO₂-Schnee auszubilden. Vorzugsweise herrscht am Pelletauslass Atmosphärendruck. So können die CO₂-Pellets beispielsweise ohne besondere Schwierigkeiten in einen Zwischenspeicher oder direkt in eine CO₂-Pellet-Beschleunigungseinrichtung übergeben werden.

Vorteilhaft ist es, wenn die Drucktrenneinrichtung mindestens ein gasdichtes oder im Wesentlichen gasdichtes Dichtelement umfasst und wenn das mindestens eine Dichtelement zwischen der Expansionseinrichtung und dem Pelletauslass angeordnet ist. Das Dichtelement kann insbesondere in Form einer Kunststoffdichtung ausgebildet sein, die am mindestens einen Verdichterrad und/oder am mindestens einen Aufnahmerad angeordnet oder ausgebildet ist.

Besonders einfach ausbilden lässt sich die Drucktrenneinrichtung, wenn das mindestens eine Dichtelement aus CO₂-Schnee, insbesondere komprimiertem CO₂-Schnee, ausgebildet ist. Der zu CO₂-Pellets zu verarbeitende CO₂-Schnee übt auf diese Weise eine Doppelfunktion aus. Er dient nicht nur als Ausgangsmaterial zur Ausbildung der CO₂-Pellets, sondern dichtet auch insbesondere das mindestens eine Verdichterrad und das mindestens eine Aufnahmerad gegeneinander ab, so dass eine Drucktrennung zwischen der Expansionseinrichtung und dem Pelletauslass ausgebildet wird.

Vorzugsweise ist das mindestens eine Dichtelement zwischen dem mindestens einen Verdichterrad und dem mindestens einen Aufnahmerad angeordnet oder ausgebildet. So kann der Zahnradverdichter insbesondere dann, wenn das mindestens eine Dichtelement aus CO₂-Schnee ausgebildet ist, auch die Drucktrenneinrichtung bilden beziehungsweise einen Teil desselben.

Die eingangs gestellte Aufgabe wird ferner bei einem Reinigungsgerät der eingangs beschriebenen Art erfindungsgemäß dadurch gelöst, dass es eine der oben beschriebenen Vorrichtungen zur Herstellung von CO₂-Pellets aus CO₂-Schnee umfasst. Mit einem solchen Reinigungsgerät ist es möglich, Oberflächen durch Bestrahlen mit einem Gemischstrom aus einem Druckgas, beispielsweise Druckluft, und CO₂-Pellets zu behandeln. Die dazu eingesetzten CO₂-Pellets können direkt im beziehungsweise durch das Reinigungsgerät erzeugt werden. Dieses ermöglicht einen minimalen Einsatz an flüssigem CO₂ oder CO₂-Gas zur Herstellung von CO₂-Schnee als Ausgangsmaterial zur Ausbildung der CO₂-Pellets.

Günstigerweise umfasst das Reinigungsgerät einen Druckgasanschluss zum Verbinden mit einer Druckgaserzeugungseinrichtung oder eine Druckgaserzeugungseinrichtung. Je nachdem, ob das Gerät in einem Bereich zum Einsatz kommt, wo ein Druckgasanschluss zur Verfügung steht oder nicht, kann so auf die jeweils einfachste Weise Druckgas genutzt beziehungsweise erzeugt werden zur Ausbildung eines Gemischstroms aus Druckgas und CO₂-Pellets.

Vorzugsweise umfasst das Reinigungsgerät eine Übergabeeinrichtung zum Übergeben der CO₂-Pellets in eine CO₂-Pellet-Beschleunigungseinrichtung zur Beschleunigung derselben. Beispielsweise können CO₂-Pellets aus dem Zahnradverdichter oder einem Zwischenspeicher mittels der Übergabeeinrichtung derart weitergeleitet werden, dass sie vor der Übergabe in einen Druckgasstrom oder durch diesen beschleunigt werden zum Ausbilden eines Gemischstroms aus Druckgas und CO₂-Pellets.

Um einen möglichst guten Reinigungseffekt zu erhalten, ist es vorteilhaft, wenn die CO₂-Pellets mit einer hohen Geschwindigkeit auf die zu behandelnden Oberflächen auftreffen. Dazu ist es günstig, wenn das Reinigungsgerät eine CO₂-Pellet-Beschleunigungseinrichtung umfasst. Diese kann insbesondere eine mit dem Druckgasanschluss oder der Druckgaserzeugungseinrichtung in Fluidverbindung stehende Druckgasleitung umfassen. Wird Druckgas durch die Druckgasleitung geleitet, können in diese eingebrachte CO₂-Pellets auf einfache und definierte Weise beschleunigt werden. Eine Geschwindigkeit der CO₂-Pellets lässt sich insbesondere durch eine Strömungsgeschwindigkeit des Druckgases beziehungsweise den in der Druckgasleitung herrschenden Druck einstellen.

Vorteilhaft ist es, wenn die Übergabeeinrichtung und/oder die CO₂-Pellet-Beschleunigungseinrichtung mindestens eine Venturi-Düse umfassen. Die mindestens eine Venturi-Düse erzeugt einen Unterdruck, welcher insbesondere CO₂-Pellets in die Druckgasleitung hineinsaugen kann, wenn die Venturi-Düse mit der Druckgasleitung in Fluidverbindung steht beziehungsweise einen Teil derselben bildet.

Gemäß einer weiteren bevorzugten Ausführungsform der Erfindung kann vorgesehen sein, dass Übergabeeinrichtung stromabwärts einen Strahlanschluss umfasst zum Verbinden mit einer Strahlleitung oder dass die Übergabeeinrichtung stromabwärts mit einer Strahlleitung in Fluidverbindung steht. So kann beispielsweise an das Reinigungsgerät eine Strahlleitung angeschlossen werden, um den Gemischstrom genau dort hinzuleiten, wo er benötigt wird.

Vorzugsweise ist an einem freien Ende der Strahlleitung eine Strahldüse angeordnet oder ausgebildet. So kann der Gemischstrom beispielsweise in definierter Weise gebündelt oder fokussiert werden, um Oberflächen sehr präzise zu behandeln, beispielsweise von Schmutz zu reinigen.

Vorteilhaft ist es, wenn das Reinigungsgerät einen CO₂-Pellet-Zwischenspeicher zum Zwischenspeichern der erzeugten CO₂-Pellets umfasst. So können die Herstellung und das Ausbringen der CO₂-Pellets beispielsweise mit der Strahldüse, vollständig getrennt voneinander werden. Insbesondere wird dadurch sowohl ein diskontinuierlicher Betrieb bei der Herstellung der CO₂-Pellets als auch ein diskontinuierlicher Betrieb beim Ausbringen der CO₂-Pellets durch die Strahlleitung beziehungswiese die Strahldüse möglich. Der CO₂-Pellet-Zwischenspeicher dient somit als Pufferspeicher.

Günstig ist es, wenn der CO₂-Pellet-Zwischenspeicher einerseits mit der Verdichtungseinrichtung und andererseits mit der Übergabeeinrichtung direkt oder indirekt in Fluidverbindung steht. So kann auf einen umständlichen Transport der CO₂-Pellets im Wesentlichen verzichtet werden. Beispielsweise kann der CO₂-Pellet-Zwischenspeicher derart angeordnet sein, dass die CO₂-Pellets aus der Verdichtungseinrichtung direkt in den CO₂-Pellet-Speicher hineinfallen durch einen Einlass des CO₂-Pellet-Zwischenspeichers und andererseits durch einen entsprechenden Auslass entnommen und insbesondere an die Übergabeeinrichtung direkt oder indirekt übergeben werden können.

Die nachfolgende Beschreibung bevorzugter Ausführungsformen der Erfindung dient im Zusammenhang mit den Zeichnungen der näheren Erläuterung. Es zeigen:
- Figur 1:: eine schematische Darstellung eines Reinigungsgeräts zum Bestrahlen von zu behandelnden Oberflächen mit einem Gemischstrom aus einem Druckgas und CO₂-Pellets;
- Figur 2:: eine schematische Darstellung einer CO₂-Pellet-Erzeugungseinrichtung;
- Figur 3:: eine schematische Darstellung einer Pellet-Erzeugungseinrichtung mit einer alternativen Verdichtungseinrichtung;
- Figur 4:: eine vergrößerte Ansicht des Bereichs A in Figur 3;
- Figur 5:: eine schematische Teilansicht einer mehrere Zahnräder umfassenden Verdichterradanordnung;
- Figur 6:: eine perspektivische Ansicht eines als Verdichterrad und/oder Aufnahmerad einsetzbaren geradverzahnten Zahnrads mit Abstreifeinrichtung;
- Figur 7:: eine weitere perspektivische Ansicht des Zahnrads aus Figur 6;
- Figur 8:: eine perspektivische Ansicht eines als Verdichterrad und/oder Aufnahmerad einsetzbaren schrägverzahnten Zahnrads.

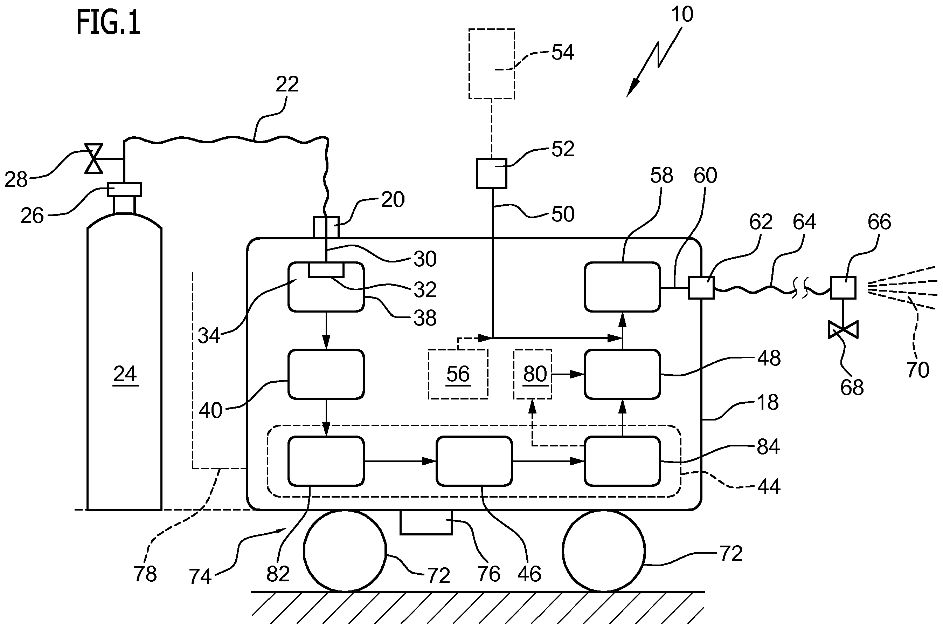

In Figur 1 ist schematisch ein insgesamt mit dem Bezugszeichen 10 bezeichnetes Reinigungsgerät zum Bestrahlen von zu behandelnden Oberflächen mit einem Gemischstrom 12 aus einem Druckgas 14 und CO₂-Pellets 16 dargestellt.

Das Reinigungsgerät 10 umfasst ein Gehäuse 18, an welchem ein CO₂-Anschluss 20 angeordnet ist, welcher über eine CO₂-Leitung 22 mit einem CO₂-Speicher 24, beispielsweise in Form einer CO₂-Druckgasflasche, verbunden ist. Diese kann insbesondere flüssiges CO₂ enthalten. Einem Auslass 26 des CO₂-Speichers nachgeschaltet ist eine mindestens ein Ventil umfassende Ventilanordnung 28, um flüssiges CO₂ aus dem CO₂-Speicher 24 durch die CO₂-Leitung 22 zu leiten.

Der CO₂-Anschluss 20 steht über eine Verbindungsleitung 30 mit einer Entspannungsdüse 32 einer Expansionseinrichtung 34 in Fluidverbindung. Das flüssige CO₂ wird durch die Expansionsdüse 32 expandiert und bildet CO₂-Schnee 36, welcher in einem Aufnahmebehälter 38 gesammelt wird.

Optional kann das Reinigungsgerät 10 ferner eine Abscheideeinrichtung 40 umfassen, um den hergestellten CO₂-Schnee 36 von nicht verfestigtem CO₂-Gas zu trennen.

Das Reinigungsgerät 10 umfasst ferner eine Vorrichtung 42 zur Herstellung von CO₂-Pellets 16 aus CO₂-Schnee 36, die eine Verdichtungseinrichtung 44 zum Verdichten von CO₂-Schnee 36 zur Ausbildung von CO₂-Pellets 16 umfasst. Die Verdichtungseinrichtung 44 ist in Form eines Zahnradverdichters 46 ausgebildet.

Die ausgebildeten CO₂-Pellets 16 werden an eine Übergabeeinrichtung 48 übergeben, welche über eine Druckgasleitung 50 mit einem Druckgasanschluss 52 in Fluidverbindung steht. Dieser kann mit einer externen Druckgasquelle 54 verbunden werden, die Druckgas, beispielsweise Druckluft bereitstellt. Optional kann das Reinigungsgerät 10 auch eine Druckgasquelle 56 umfassen, beispielsweise eine Druckluftflasche oder einen Kompressor zur Erzeugung von Druckluft mit einem gewünschten Druck.

Nach der Übergabeeinrichtung 48 wird ein Gemischstrom gebildet durch das Druckgas und die darin eingebrachten CO₂-Pellets 16. Mit einer Beschleunigungseinrichtung 58 werden die CO₂-Pellets 16 durch den Druckgasstrom beschleunigt. Die Beschleunigungseinrichtung 58 ist über eine Leitung 60 mit einem stromabwärts angeordneten Strahlanschluss 62 in Fluidverbindung stehend. An den Strahlanschluss 62 kann optional eine Strahlleitung 64 angeschlossen werden oder dauerhaft angeschlossen sein. An einem freien Ende der Strahlleitung 64 ist optional eine Strahldüse 66 angeordnet, welche optional ein Ventil 68 umfassen kann zur Regelung der Form und/oder der Stärke des aus der Strahldüse 66 austretenden Partikelstrahls 70.

Das Reinigungsgerät 10 kann optional fahrbar ausgebildet sein und ein mindestens drei Räder 72 umfassendes Fahrgestell 74 aufweisen. Optional kann das Reinigungsgerät 10 einen Antrieb 76 zum Antreiben mindestens eines Rads 72 aufweisen.

Ferner kann das Reinigungsgerät 10 eine Halteeinrichtung 78 aufweisen, zum Aufnehmen eines oder mehrerer CO₂-Speicher 24. Insgesamt kann das Reinigungsgerät 10 so ausgebildet werden, dass es völlig unabhängig von externen Strom- und CO₂-Versorgungen oder Druckgasquellen betrieben werden kann.

Optional kann zwischen der Verdichtungseinrichtung 44 und der Übergabeeinrichtung 48 ein Zwischenspeicher 80 für CO₂-Pellets ausgebildet oder angeordnet sein.

Die Verdichtungseinrichtung 44 umfasst insbesondere auch eine Übergabeeinrichtung 82 zum Übergeben von CO₂-Schnee 36 von der Expansionseinrichtung 34 beziehungsweise der Abscheideeinrichtung 40 an den Zahnradverdichter 46.

Optional kann die Verdichtungseinrichtung 44 eine Extrudiereinrichtung 84 umfassen zum Extrudieren der CO₂-Pellets 16.

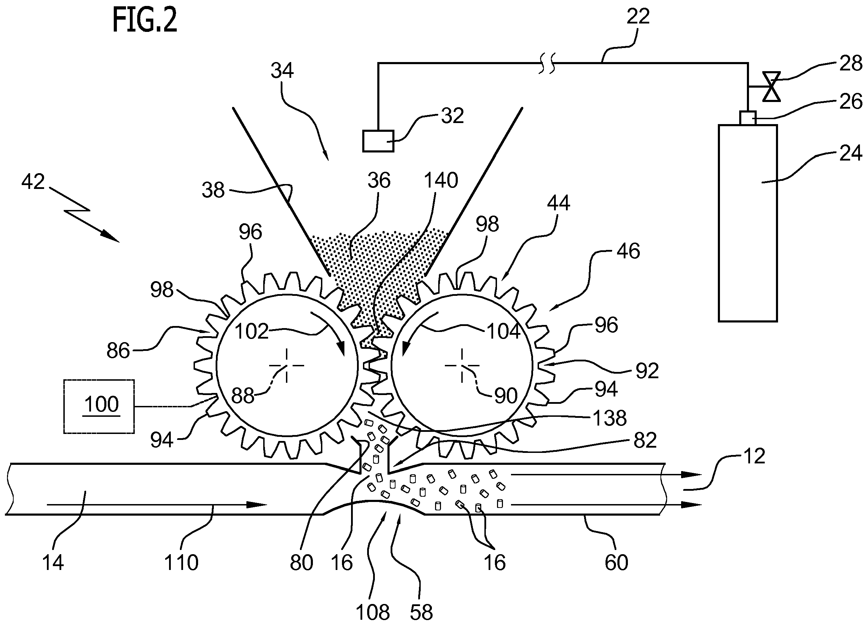

Die Funktionsweise der Verdichtungseinrichtung 44 wird nachfolgend in Verbindung mit Figur 2 näher erläutert.

Der Zahnradverdichter 46 umfasst ein um eine erste Drehachse 88 drehbar angeordnetes Verdichterrad 86 und ein um eine zweite Drehachse 90 drehbar angeordnetes Aufnahmerad 92. Das Verdichterrad 86 und das Aufnahmerad 92 sind im Wesentlichen identisch ausgebildet und weisen jeweils eine Mehrzahl von Zähnen 94 auf, die Vedichtungselemente 96 bilden. Zwischen den Zähnen 94 sind Schneeaufnahmen 98 ausgebildet.

Das Verdichterrad 86 und das Aufnahmerad 92 sind derart angeordnet, dass die erste Drehachse 88 und die zweite Drehachse 90 parallel zueinander verlaufen und die Zähne 94 in die Schneeaufnahmen 98 eingreifen, vorzugswweise ohne sie zu berühren. Ein Antrieb 100 dient zum in Drehung Versetzen des Verdichterrads 86 und/oder des Aufnahmerads 92. Das Verdichterrad 86 rotiert wie in Figur 2 schematisch dargestellt in Richtung des Pfeils 102, also im Uhrzeigersinn, das Aufnahmerad 92 rotiert in Richtung des Pfeils 104, also im Gegenuhrzeigersinn.

Die Zähne 94 des Verdichterrads 86 und des Aufnahmerads 92 nehmen CO₂-Schnee 36 aus dem Aufnahmebehälter mit, wobei dann jeweils ein Zahn 94 den in einer Schneeaufnahme 98 aufgenommenen CO₂-Schnee 36 beim Ineinandergreifen der Zähne 94 in die Schneeaufnahmen 98 hinein komprimiert. In Schwerkraftrichtung unten fallen dann die komprimierten CO₂-Pellets aus dem Zahnradverdichter 46 heraus. Form und Größe der so erzeugten CO₂-Pellets 16 sind im Wesentlichen identisch und hängen im Wesentlichen davon ab, wie breit die Zähne 94 parallel zu den Drehachsen 88 und 90 sind.

Die erzeugten CO₂-Pellets 16 fallen in den Zwischenspeicher 18, der optional auch weggelassen werden kann. Er kann unterschiedlich groß ausgebildet sein.

Der Zwischenspeicher 80 ist an die Beschleunigungseinrichtung 58 angeschlossen, die eine Venturidüse 108 umfasst. Im Bereich der Venturidüse 108 verringert sich ein Querschnitt einer sich stromaufwärts an die Venturidüse 108 anschließenden Druckgasleitung 110, so dass im Bereich der Verbindung zwischen dem Zwischenspeicher 80 und der Venturidüse 108 ein Unterdruck entsteht. Auf diese Weise wird die Übergabeeinrichtung 82 definiert, die CO₂-Pellets 16 in die Druckgasleitung 110 hinein saugt. Die Venturidüse 108 bildet auch einen Teil der Beschleunigungseinrichtung 58, die die im Wesentlichen ruhenden CO₂-Pellets 16 aus dem Zwischenspeicher 80 auf im Wesentlichen eine Geschwindigkeit des in der Druckgasleitung 110 strömenden Druckgases 14 beschleunigt. Stromabwärts der Venturidüse 108 strömt dann der Gemischstrom 12 aus CO₂-Pellets 16 und Druckgas 14 durch die Leitung 60 zum Strahlanschluss 62.

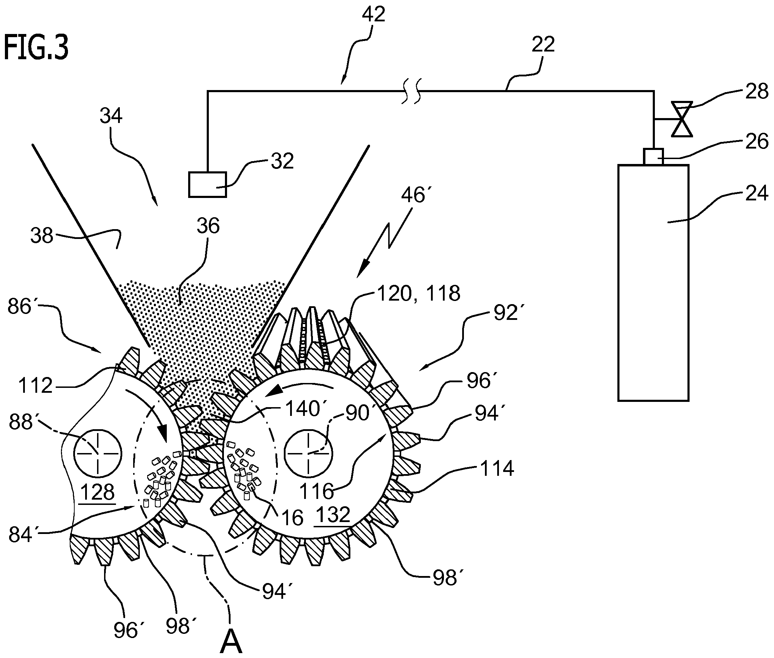

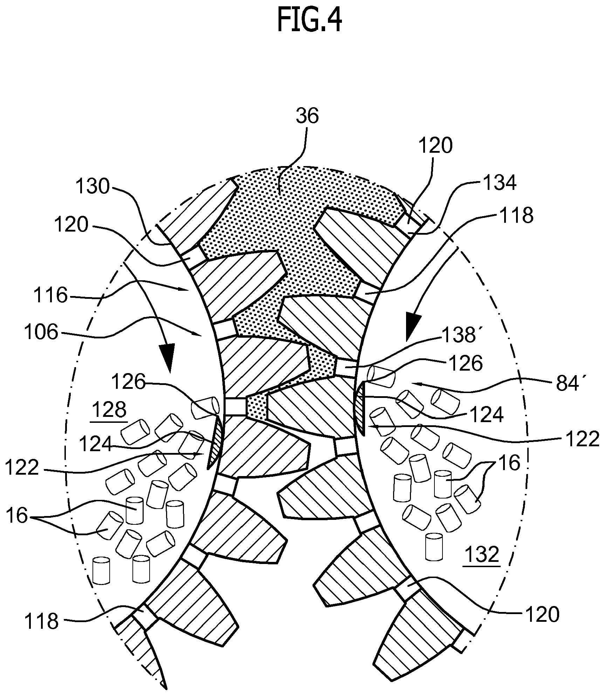

In den Figuren 3 und 4 ist eine alternative Ausgestaltung eines Zahnradverdichters insgesamt mit dem Bezugszeichen 46' bezeichnet. Teile der Vorrichtung 42, die denen in der Figur 2 schematisch dargestellten Anordnung entsprechen, sind mit identischen Bezugszeichen bezeichnet.

Der Zahnradverdichter 46' umfasst ebenfalls ein Verdichterrad 86' und ein Aufnahmerad 92'. Diese sind um die Drehachsen 88' und 90' drehbar angeordnet. Das Verdichterrad 86' und das Aufnahmerad 92' sind nicht massiv ausgebildet, sondern umfassen eine Verdichterradhülse 112 beziehungsweise eine Aufnahmeradhülse 114, die jeweils in radialer Richtung von der jeweiligen Drehachse 88' beziehungsweise 90' weg weisende Zähne 94' aufweisen. Zwischen den Zähnen 94' sind wiederum Schneeaufnahmen 98' ausgebildet.

Der Zahnradverdichter 46' umfasst ferner eine Extrudiereinrichtung 84'. Diese umfasst zwei Extrusionsmatrizen 116, welche gebildet sind durch eine Mehrzahl von Durchbrechungen 118, die die Verdichterradhülse 112 beziehungsweise die Aufnahmeradhülse 114 durchsetzen. Die Durchbrechungen 118 sind in Form von in radialer Richtung von den Drehachsen 88' beziehungsweise 90' weg weisenden Bohrungen 120 ausgebildet. Bei dem in den Figuren 3 und 4 dargestellten Verdichterrad 86' und dem Aufnahmerad 92' sind jeweils mehrere Durchbrechungen 118 nebeneinander in den Schneeaufnahmen 98' ausgebildet beziehungsweise münden in diese. Die gegenläufig drehbar angeordneten und miteinander zusammenwirkenden Verdichterräder 86' und Aufnahmeräder 92' nehmen in den Schneeaufnahmen 98' CO₂-Schnee 36 aus dem Aufnahmebehälter 38 auf. Anders als beim Zahnradverdichter 46 wird der CO₂-Schnee 36 mit dem Zahnradverdichter 46' nicht nur komprimiert und nach der Kompression zwischen den beiden Drehachsen 88 und 90 in Schwerkraftrichtung unterhalb des Zahnradverdichters 46 freigegeben, sondern der CO₂-Schnee 36 wird durch die Durchbrechungen 118 hindurch komprimiert, so dass CO₂-Pellets ausgebildet werden, und zwar durch Extrusion, nämlich durch die Aufnahmeradhülse 114 hindurch nach innen in einen Aufnahmeradhülseninnenraum 132 beziehungsweise durch die Verdichterradhülse 112 in einen Verdichterradhülseninnenraum 128 hinein.

Um CO₂-Pellets 16 konstanter Länge auszubilden, ist optional eine Abstreifeinrichtung 122 vorgesehen, die ein oder zwei Abstreifelemente 124 umfasst, die jeweils im inneren der Aufnahmeradhülse 114 beziehungsweise der Verdichterradhülse 112 angeordnet sein können. Die Abstreifelemente 124 weisen eine Abstreifkante 126 auf, welche eine den Verdichterradhülseninnenraum 128 begrenzende Verdichterradhülseinnenfläche 130 berührt oder nahezu berührt und/oder eine den Aufnahmeradhülseninnenraum 132 begrenzende Aufnahmeradhülseninnenfläche 134 berührt oder nahezu berührt. Die durch die Durchbrechungen 118 hindurch gepressten CO₂-Pellets 16 werden dadurch abgestreift. Die Abstreifelemente 124 sind an der Vorrichtung 42 feststehend angeordnet, rotieren also nicht mit dem Verdichterrad 86' beziehungsweise dem Aufnahmerad 92' mit.

Sowohl beim Zahnradverdichter 46 als auch beim Zahnradverdichter 46' bilden die Verdichtungselemente 96 beziehungsweise 96' sowie die Schneeaufnahmen 98 beziehungsweise 98' jeweils zusammenwirkende Kolbenzylinderanordnungen, in denen CO₂-Schnee 36 zu CO₂-Pellets 16 geformt wird.

Zwischen dem Aufnahmebehälter 38 und dem Zwischenspeicher 80 ist vorzugsweise eine Drucktrenneinrichtung 106 ausgebildet. Sie dient zur Ausbildung einer Druckstufe zwischen der Expansionseinrichtung 34 und einem Pelletauslass 138 beziehungsweise 138'. Die Drucktrenneinrichtung 106 umfasst mindestens ein gasdichtes oder im Wesentlichen gasdichtes Dichtelement 140 beziehungsweise 140', welches zwischen der Expansionseinrichtung 34 und dem Pelletauslass 138 beziehungsweise 138' angeordnet ist. Vorzugsweise ist das mindestens eine Dichtelement 140 beziehungsweise 140' aus CO₂-Schnee 36 ausgebildet, insbesondere aus komprimiertem CO₂-Schnee 36. Wie in den Figuren 2 bis 4 schematisch dargestellt, ist das mindestens eine Dichtelement 140 beziehungsweise 140' zwischen dem mindestens einen Verdichterrad 86 beziehungsweise 86' und dem mindestens einen Aufnahmerad 92 beziehungsweise 92' angeordnet oder ausgebildet.

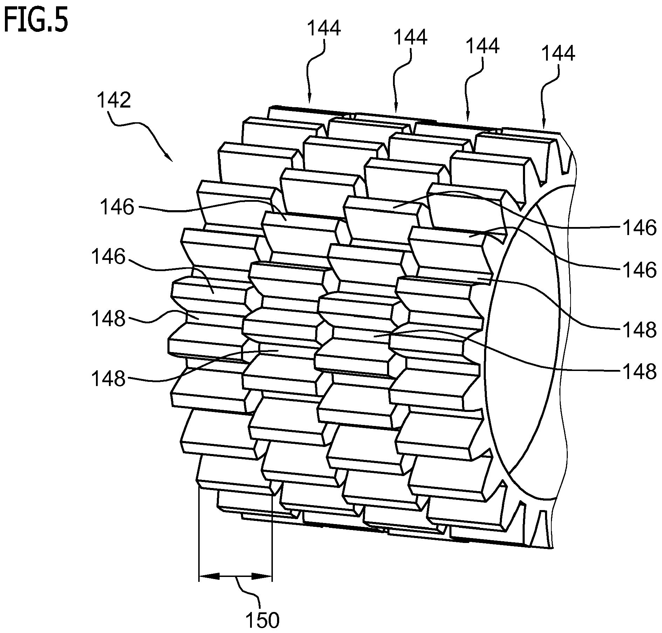

In Figur 5 ist beispielhaft ein Ausschnitt aus einer Verdichterradanordnung 142 schematisch dargestellt, die beispielsweise als Verdichterrad 86 genutzt werden kann. Die Verdichterradanordnung 142 umfasst mehrere Zahnräder 144, die nebeneinander auf derselben Welle um dieselbe Drehachse rotierend gelagert sind. Zähne 146 der Zahnräder 144 sind derart angeordnet, dass Zähne 146 benachbarter Zahnräder in Umfangsrichtung versetzt angeordnet sind, und zwar um einen halben Zahnabstandswinkel. Dies führt dazu, dass Zähne 146 benachbarter Zahnräder jeweils auf Höhe der zwischen den Zähnen 146 ausgebildeten Schneeaufnahmen 148 angeordnet sind. So kann eine Pelletlänge auf einfache Weise vorgegeben werden, und zwar durch eine Breite 150 der Zähne 146 parallel zur Drehachse der Verdichterradanordnung 142. Durch diese Ausgestaltung sind Verdichtungselementzwischenräume, also die Schneeaufnahmen 148, sowohl in Umfangsrichtung als auch in axialer Richtung durch Zähne 146 begrenzt.

In analoger Weise zur Verdichterradanordnung 142 kann eine praktisch identisch ausgebildete Aufnahmeradanordnung vorgesehen sein, die mit der Verdichterradanordnung 142 zusammenwirkt, analog wie schematisch in Figur 2 dargestellt. Optional kann die Verdichterradanrordnung 142 auch mit Verdichterrädern 86' ausgebildet werden, die Durchbrechungen 118 aufweisen, so dass CO₂-Pellets 16 durch die Verdichterradhülse 112 hindurch in einen Verdichterradhülseninnenraum extrudiert und dort optional abgestreift werden können.

Bei dem Antrieb 100 kann es sich um einen externen Synchronantrieb handeln, wobei dann die Verdichterräder 86 beziehungsweise 86' und die Aufnahmeräder 92 beziehungsweise 92' mit ihren jeweiligen Zähnen 94 beziehungsweise 94' nicht in Berührung stehen. Vorzugsweise wird ein definierter Spalt zwischen den Zähnen 94 beziehungsweise 94' eingestellt. Des Weiteren kann die Übergabeeinrichtung 82 in Form einer CO₂-Pellet-Schleuse ausgebildet werden, die nur bei Bedarf CO₂-Pellets 16 freigibt.

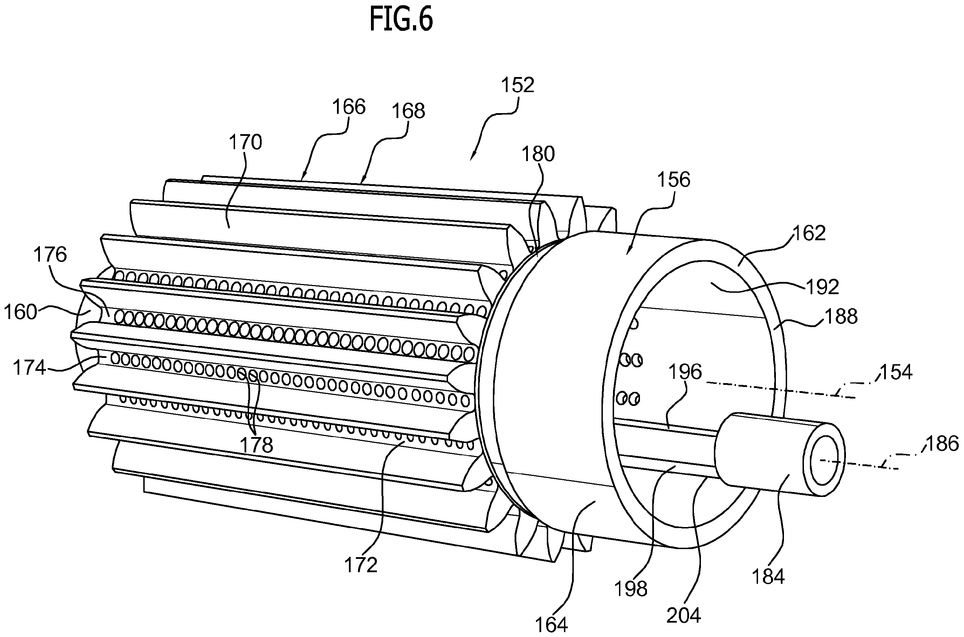

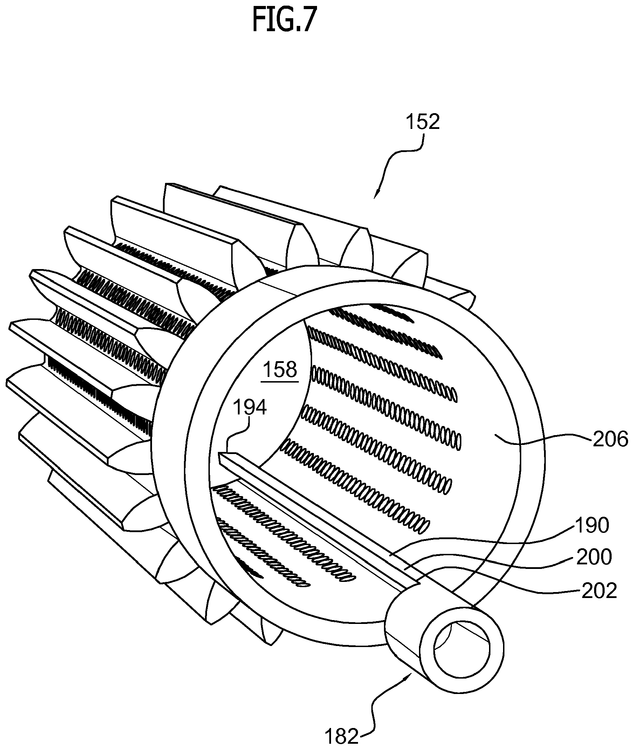

In den Figuren 6 und 7 ist schematisch ein insgesamt mit dem Bezugszeichen 152 bezeichnetes Zahnrad dargestellt. Es umfasst eine langgestreckte, konzentrisch zu einer Längsachse 154 ausgebildete Hülse 156. Ein Ende der Hülse ist mit einer Stirnwand 158 verschlossen, auf welcher von einer Außenseite ebenfalls konzentrisch zur Längsachse eine Kupplungshülse 160 abstehend ausgebildet ist.

Von einem der Stirnwand 158 gegenüberliegendem Ende 162 erstreckt sich ein hohlzylindrischer Hülsenabschnitt 164 in Richtung auf die Stirnwand 158 hin. An den Hülsenabschnitt 164 schließt sich eine Verzahnung 166 an, die in Form einer Geradverzahnung 168 mit einer Mehrzahl langgestreckter Zähne 170 ausgebildet ist. Die sich parallel zur Längsachse 154 von einer Außenseite 172 der Hülse 156 in radialer Richtung bezogen auf die Längsachse 154 von dieser weg erstreckenden Zähne 170 sind gleichmäßig über den Umfang der Hülse 156 angeordnet.

Die Zähne 170 sind in Umfangsrichtung voneinander beabstandet, so dass jeweils zwischen zwei Zähnen 170 ein Zahnzwischenraum 174 definiert wird. Der Zahnzwischenraum 174 wird somit begrenzt von zwei Zähnen 170 und einem streifenförmigen Oberflächenbereich 176 der Hülse 156.

Der Oberflächenbereich 176 weist eine Mehrzahl von Bohrungen auf, die parallel zur Längsachse 154 angeordnet sind und deren Längsachsen in radialer Richtung von der Längsachse 154 weg weisen.

In einem Übergangsbereich zwischen dem Hülsenabschnitt 164 und der Verzahnung 166 verjüngt sich der Hülsenabschnitt 164 etwas, sodass ein von der Außenseite 172 im Bereich der Verzahnung 166 definierter Außendurchmesser der Hülse 156 etwas kleiner ist als ein Außendurchmesser der Hülse 156 im Bereich des Hülsenabschnitts 164.

In den Figuren 6 und 7 ist ferner schematisch eine Abstreifeinrichtung 182 dargestellt. Sie umfasst eine Lagerhülse 184, deren Längsachse 186 parallel zur Längsachse 154 verläuft. Ein Außendurchmesser der Lagerhülse 184 entspricht etwa einem Viertel des Außendurchmessers des Hülsenabschnitts 164.

Von einer Stirnseite der Lagerhülse 184, die in Richtung auf eine das Ende 162 definierende, ringförmige Stirnfläche 188 hin weist, steht ein Abstreifelement 190 ab und ragt in einen Innenraum 192 des Zahnrads 152 hinein. Das Abstreifelement 190 erstreckt sich mit seinem freien Ende 194 bis an die Stirnwand 158 heran und ist in Form eines Zylinderwandausschnitts ausgebildet, welcher definiert wird durch einen Teil einer hohlzylindrischen Hülse und eine Verlängerung der Lagerhülse 184 bildet.

Bezogen auf die Längsachse 186 erstreckt sich das Abstreifelement 190 in Umfangsrichtung über einen Umfangswinkel von etwa 60°. Abstreifflächen 196 und 198 definieren Ebenen, welche die Längsachse 186 enthalten. Die Abstreifflächen 196 und 198 definieren mit einer Außenfläche 200 des Abstreifelements 190 jeweils eine Abstreifkante 202 beziehungsweise 204.

Die Abstreifeinrichtung 182 ist derart angeordnet, dass die Außenfläche 200 eine Innenfläche 206 der Hülse 156 berührt oder nahezu berührt. Ferner kann die Lagerhülse 184 mit einem Antrieb gekoppelt und um ihre eigene Längsachse 186 rotierbar angetrieben werden. Dies ermöglicht es insbesondere, sowohl das Zahnrad 152 um seine Längsachse 154 zu rotieren als auch das Abstreifelement 190 um die Längsachse 186. Beispielsweise kann das Abstreifelement 190 mit einer Drehzahl rotiert werden, welche einem ganzzahligen Vielfachen einer Drehzahl des Zahnrads 152 entspricht. Beispielsweise kann die Drehzahl einem N-fachen der Drehzahl des Zahnrads 152 entsprechen, wobei N der Zahl der Zähne 170 entspricht. So kann bei jedem Vorbeirotieren einer Reihe von Bohrungen 178 das Abstreifelement 190 einmal um seine eigene Achse rotieren und durch die Bohrungen 178 extrudierte CO₂-Pellets abstreifen oder abtrennen, sodass diese alle im Wesentlichen eine einheitliche und definierte Länge aufweisen.

Das Zahnrad 152 kann insbesondere sowohl als eines der oben beschriebenen Verdichterräder 86 beziehungsweise 86' oder als eines der oben beschriebenen Aufnahmeräder 92 beziehungsweise 92' eingesetzt werden.

Extrudierte und mit dem Abstreifelement 190 abgetrennte CO₂-Pellets können durch das offene Ende 162 der Hülse 156 abgeführt und an den Zwischenspeicher 80 oder die Übergabeeinrichtung 82 übergeben werden.

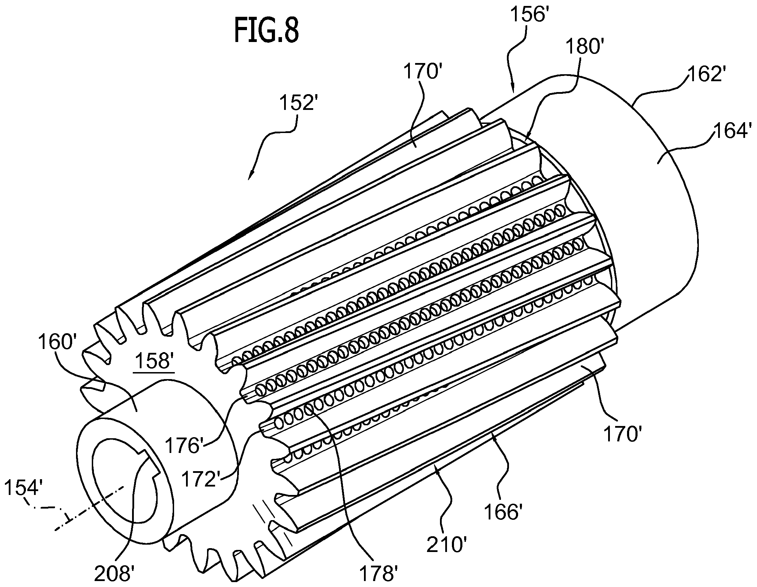

In Figur 8 ist ein weiteres Ausführungsbeispiel eines insgesamt mit dem Bezugszeichen 152' bezeichneten Zahnrads schematisch dargestellt. Es entspricht in seinem grundsätzlichen Aufbau dem Zahnrad 152, sodass zur nachfolgenden Bezeichnung von Teilen des Zahnrads 152' Bezugszeichen verwendet werden, die den Bezugszeichen des Zahnrads 152 mit nachgestelltem Anstrich entsprechen.

Die Kopplungshülse 160' weist eine in Richtung auf die Längsachse 154' hin weisend geöffnete Kopplungsausnehmung 208' auf, in die ein entsprechender Kopplungsvorsprung an einer Antriebswelle, auf die die Kopplungshülse 160' aufgeschoben werden kann, eingreifen kann. So kann eine Formschlussverbindung zwischen der Antriebswelle und der Kopplungshülse 160 ausgebildet werden, um das Zahnrad 152', ebenso wie das Zahnrad 152, in definierter und sicherer Weise um die Längsachse 154' rotieren zu können.

Das Zahnrad 152' unterscheidet sich vom Zahnrad 152 im Wesentlichen dadurch, dass die Verzahnung 166' in Form einer Schrägverzahnung 210' ausgebildet ist. Die Zähne 170' verlaufen somit nicht parallel zur Längsachse 154', sondern auf der Außenseite 172' schräg zur Längsachse 154'. Um ein Ineinandergreifen der Schrägverzahnung 210' mit der Schrägverzahnung 210' eines zweiten Zahnrads 152' zu ermöglichen, sind die Zähne 170' in sich verwunden, und zwar derart, dass sie an jeder Stelle in radialer Richtung von der Längsachse 154 weg weisend von der Außenseite 172 abstehen. In den Zahnzwischenräumen 174' sind im jeweiligen Oberflächenbereich 176' wiederum Bohrungen 178' nebeneinander angeordnet.

Das Zahnrad 152' kann mit einem weiteren solchen Zahnrad 152' die Verdichterräder 86 beziehungsweise 86' und die Aufnahmeräder 92 beziehungsweise 92' ersetzen. Ferner kann auch beim Zahnrad 152' eine Abstreifeinrichtung 182 vorgesehen sein, wie sie oben in Verbindung mit dem Zahnrad 152 beschrieben wurde.

Mit dem Reinigungsgerät 10 ist es in der beschriebenen Weise möglich, Oberflächen mit dem Gemischstrom 12 aus Druckgas 14 und CO₂-Pellets 16 wirkungsvoll zu reinigen. Die CO₂-Pellets 16 sublimieren nach der Anwendung und müssen nicht gesondert entsorgt werden.

### Bezugszeichenliste

- 10: Reinigungsgerät
- 12: Gemischstrom
- 14: Druckgas
- 16: CO₂-Pellet
- 18: Gehäuse
- 20: CO₂-Anschluss
- 22: CO₂-Leitung
- 24: CO₂-Speicher
- 26: Auslass
- 28: Ventilanordnung
- 30: Verbindungsleitung
- 32: Entspannungsdüse
- 34: Expansionseinrichtung
- 36: CO₂-Schnee
- 38: Aufnahmebehälter
- 40: Abscheideeinrichtung
- 42: Vorrichtung
- 44: Verdichtungseinrichtung
- 46, 46': Zahnradverdichter
- 48: Übergabeeinrichtung
- 50: Druckgasleitung
- 52: Druckgasanschluss
- 54: Druckgasquelle
- 56: Druckgasquelle
- 58: Beschleunigungseinrichtung
- 60: Leitung
- 62: Strahlanschluss
- 64: Strahlleitung
- 66: Strahldüse
- 68: Ventil
- 70: Partikelstrahl
- 72: Rad
- 74: Fahrgestell
- 76: Antrieb
- 78: Halteeinrichtung
- 80: Zwischenspeicher
- 82: Übergabeeinrichtung
- 84: Extrudiereinrichtung
- 86, 86': Verdichterrad
- 88, 88': erste Drehachse
- 90, 90': zweite Drehachse
- 92, 92': Aufnahmerad
- 94, 94': Zahn
- 96, 96': Verdichtungselement
- 98: Schneeaufnahme
- 100: Antrieb
- 102: Pfeil
- 104: Pfeil
- 106: Drucktrenneinrichtung
- 108: Venturi-Düse
- 110: Druckgasleitung
- 112: Verdichterradhülse
- 114: Aufnahmeradhülse
- 116: Extrusionsmatrize
- 118: Durchbrechung
- 120: Bohrung
- 122: Abstreifeinrichtung
- 124: Abstreifelement
- 126: Abstreifkante
- 128: Verdichterradhülseninnenraum
- 130: Verdichterradhülseninnenfläche
- 132: Aufnahmeradhülseninnenraum
- 134: Aufnahmeradhülseninnenfläche
- 138: Pelletauslass
- 140: Dichtelement
- 142: Verdichterradanordnung
- 144: Zahnrad
- 146: Zahn
- 148: Schneeaufnahme
- 150: Breite
- 152, 152': Zahnrad
- 154, 154': Längsachse
- 156, 156': Hülse
- 158, 158': Stirnwand
- 160, 160': Kupplungshülse
- 162, 162': Ende
- 164, 164': Hülsenabschnitt
- 166, 166': Verzahnung
- 168: Geradverzahnung
- 170, 170': Zahn
- 172, 172': Außenseite
- 174, 174': Zahnzwischenraum
- 176, 176': Oberflächenbereich
- 178, 178': Bohrung
- 182: Abstreifeinrichtung
- 184: Lagerhülse
- 186: Längsachse
- 188: Stirnfläche
- 190: Abstreifelement
- 192: Innenraum
- 194: freies Ende
- 196: Abstreiffläche
- 198: Abstreiffläche
- 200: Außenfläche
- 202: Abstreifkante
- 204: Abstreifkante
- 206: Innenfläche
- 208': Kopplungsausnehmung
- 210': Schrägverzahnung

## Patentansprüche

1. Vorrichtung (42) zur Herstellung von CO₂-Pellets (16) aus CO₂-Schnee (36), insbesondere für ein Reinigungsgerät (10) zum Bestrahlen von zu behandelnden Oberflächen mit einem Gemischstrom (12) aus einem Druckgas (14) und CO₂-Pellets (16), umfassend eine Verdichtungseinrichtung (44) zum Verdichten von CO₂-Schnee (36) zur Ausbildung von CO₂-Pellets (16), wobei die Verdichtungseinrichtung (44) einen Zahnradverdichter (46; 46') umfasst, wobei der Zahnradverdichter (46; 46') mindestens ein um eine erste Drehachse (88; 88') rotierbar gelagertes Verdichterrad (86; 86'; 142; 152; 152') mit einer Mehrzahl von Verdichtungselementen (96; 96') und mindestens ein mit dem mindestens einen Verdichterrad (86; 86'; 142; 152; 152') zusammenwirkendes, um eine zweite Drehachse (90; 90') rotierbar gelagertes Aufnahmerad (92; 92'; 152; 152') mit einer Mehrzahl von korrespondierend zu den Verdichtungselementen (96; 96'; 146) ausgebildeten Schneeaufnahmen (98; 98'; 148) zum Aufnehmen von CO₂-Schnee (36) umfasst, wobei das Aufnahmerad (92'; 152; 152') eine Aufnahmeradhülse (114) mit einer Aufnahmeradhülsenwand umfasst, wobei die Schneeaufnahmen (98') in der Aufnahmeradhülsenwand angeordnet oder ausgebildet sind und wobei die Schneeaufnahmen (98; 98'; 148) in Form von in radialer Richtung geöffneten Vertiefungen ausgebildet sind, **dadurch gekennzeichnet, dass** ein von der Aufnahmeradhülse ausgebildeter Innenraum zum Aufnehmen der CO₂-Pellets ausgebildet ist.

2. Vorrichtung nach Anspruch 1, **dadurch gekennzeichnet,**
a) **dass** die Verdichtungselemente (96; 96'; 146) in Form von in radialer Richtung vom Verdichterrad (86; 86'; 142; 152; 152') abstehenden Zähnen (94; 94'; 170; 170') ausgebildet sind
und/oder
b) **dass** die Vorrichtung (42) zwei oder mehr Verdichterräder (144) umfasst, die in Umfangsrichtung versetzt angeordnet sind, so dass Verdichtungselementzwischenräume (148) sowohl in Umfangsrichtung als auch in axialer Richtung durch Verdichtungselemente (146) begrenzt sind,
und/oder
c) **dass** das mindestens eine Verdichterrad (86; 86'; 152; 152') und das mindestens eine Aufnahmerad (92; 92'; 152; 152') identisch oder im Wesentlichen identisch ausgebildet sind
und/oder
d) **dass** die erste und die zweite Drehachse (88; 88'; 90; 90') parallel oder im Wesentlichen parallel zueinander verlaufen
und/oder
e) **dass** die Mehrzahl von Schneeaufnahmen (98; 98'; 148) in Form von Zwischenräumen ausgebildet ist, die zwischen der Mehrzahl von Verdichtungselementen (96; 96'; 146) angeordnet oder ausgebildet sind
und/oder
f) **dass** die Vorrichtung (42) eine Extrudiereinrichtung (84) zum Extrudieren von CO₂-Pellets (16) umfasst.

3. Vorrichtung nach Anspruch 2, **dadurch gekennzeichnet, dass** die Extrudiereinrichtung (84) mindestens eine Extrusionsmatrize (116) mit einer Mehrzahl von Durchbrechungen (118; 178; 178') umfasst.

4. Vorrichtung nach Anspruch 3, **dadurch gekennzeichnet,**
a) **dass** jede der Mehrzahl von Durchbrechungen (118; 178; 178') eine Längsachse definiert, die sich in radialer oder im Wesentlichen in radialer Richtung von der ersten oder zweiten Drehachse (90; 90') weg erstreckt,
und/oder
b) **dass** jede Schneeaufnahme (98') mit mindestens einer Durchbrechung (118; 178; 178') in Fluidverbindung steht.

5. Vorrichtung nach einem der Ansprüche 1 bis 4, **dadurch gekennzeichnet,**
a) **dass** das Verdichterrad (86'; 152; 152') eine Verdichterradhülse (112) mit einer Verdichterradhülsenwand umfasst und dass die Verdichtungselemente (96') auf einer Außenseite der Verdichterradhülse (112) angeordnet oder ausgebildet sind,
wobei insbesondere die Verdichterradhülse (112) einen Innenraum (128) zur Aufnahme der CO₂-Pellets um-fasst,
und/oder
b) **dass** die Vorrichtung (42) eine Antriebseinrichtung (100) zum Antreiben des mindestens einen Verdichterrads (86; 86'; 142; 152; 152') und/oder des mindestens einen Aufnahmerads (92; 92'; 152; 152') umfasst
und/oder
c) **dass** die Vorrichtung (42) einen Speicherbehälter (38) zum Aufnehmen und Speichern von CO₂-Schnee (36) umfasst,
wobei insbesondere der Innenraum (132) der Aufnahmeradhülse (114) den Speicherbehälter (38) bildet,
und/oder
d) **dass** die Vorrichtung (42) einen CO₂-Anschluss (20) zum Verbinden mit einem flüssiges CO₂ enthaltenden CO₂-Speicher (24) oder einen flüssiges CO₂ enthaltenden CO₂-Speicher (24) umfasst,
wobei die Vorrichtung (42) insbesondere eine mit dem CO₂-Anschluss (20) oder mit dem CO₂-Speicher (24) in Fluidverbindung stehende Expansionseinrichtung (34) zum Erzeugen von CO₂-Schnee (36) aus flüssigem oder gasförmigem CO₂ umfasst,
wobei weiter insbesondere die Expansionseinrichtung (34) eine mit dem CO₂-Anschluss (20) oder mit dem CO₂-Speicher (24) in Fluidverbindung stehende Entspannungsdüse (32) umfasst,
und/oder
e) **dass** die Vorrichtung (42) eine Abstreifeinrichtung (122) zum Abstreifen der ausgebildeten CO₂-Pellets (16) von dem Zahnradverdichter (46; 46') umfasst.

6. Vorrichtung nach einem der Ansprüche 2 bis 5, **dadurch gekennzeichnet, dass** die Abstreifeinrichtung (122) zum Abstreifen der ausgebildeten CO₂-Pellets (16) von dem mindestens einen Verdichterrad (86') und/oder von dem mindestens einen Aufnahmerad (92'),
wobei insbesondere die Abstreifeinrichtung (122; 182) mindestens ein Abstreifelement (124; 190) umfasst, welches in einem von der Verdichterradhülse (112) definierten Verdichterradhülseninnenraum (128) oder in einem von der Aufnahmeradhülse (114) definierten Aufnahmeradhülseninnenraum (132) angeordnet oder ausgebildet ist oder in diese mindestens teilweise hineinragt,
wobei weiter insbesondere das mindestens eine Abstreifelement (124; 190) eine Abstreifkante (126; 202) umfasst, welche eine den Verdichterradhülseninnenraum (128) begrenzende Verdichterradhülseninnenfläche (130; 206) der Verdichterradhülse (112) berührt oder nahezu berührt oder eine den Aufnahmeradhülseninnenraum (132) begrenzende Aufnahmeradhülseninnenfläche (134) der Aufnahmeradhülse (114) berührt oder nahezu berührt.

7. Vorrichtung nach einem der Ansprüche 2 bis 6, **dadurch gekennzeichnet, dass** die Verdichtungseinrichtung (44) einen Pelletauslass (138) aufweist, welcher insbesondere entweder parallel zur ersten oder zweiten Drehachse (88; 90) ausgerichtet ist oder quer, insbesondere senkrecht, zur ersten oder zweiten Drehachse (88'; 90').

8. Vorrichtung nach Anspruch 7, **dadurch gekennzeichnet,**
a) **dass** der Pelletauslass (138) zwischen der ersten und der zweiten Drehachse (88; 90) angeordnet oder ausgebildet ist
und/oder
b) **dass** der Pelletauslass (138) mit einem CO₂-Pellet-Zwischenspeicher (80) zum Zwischenspeichern der erzeugten CO₂-Pellets (16) oder einer Übergabeeinrichtung (82) zum Übergeben der CO₂-Pellets (16) in eine CO₂-Pellet-Beschleunigungseinrichtung (58) zum Beschleunigen derselben direkt oder indirekt in Fluidverbindung steht
und/oder
c) **dass** die Vorrichtung (42) eine Drucktrenneinrichtung (106) zur Ausbildung einer Druckstufe zwischen der Expansionseinrichtung (34) und dem Pelletauslass (138; 138') umfasst.

9. Vorrichtung nach Anspruch 8, **dadurch gekennzeichnet, dass** die Drucktrenneinrichtung (106) mindestens ein gasdichtes oder im Wesentlichen gasdichtes Dichtelement (140; 140') umfasst und dass das mindestens eine Dichtelement (140; 140') zwischen der Expansionseinrichtung (34) und dem Pelletauslass (138) angeordnet ist.

10. Vorrichtung nach Anspruch 9, **dadurch gekennzeichnet,**
a) **dass** das mindestens eine Dichtelement (140; 140') aus CO₂-Schnee (36), insbesondere komprimiertem CO₂-Schnee (36), ausgebildet ist,
und/oder
b) **dass** das mindestens eine Dichtelement (140; 140') zwischen dem mindestens einen Verdichterrad (86; 86'; 152; 152') und dem mindestens einen Aufnahmerad (92; 92'; 152; 152') angeordnet oder ausgebildet ist.

11. Reinigungsgerät (10) zum Bestrahlen von zu behandelnden Oberflächen mit einem Gemischstrom (12) aus einem Druckgas (14) und CO₂-Pellets, **gekennzeichnet durch** eine Vorrichtung (42) zur Herstellung von CO₂-Pellets (16) aus CO₂-Schnee (36) nach einem der voranstehenden Ansprüche.

12. Reinigungsgerät nach Anspruch 11, **dadurch gekennzeichnet,**
a) **dass** das Reinigungsgerät einen CO₂-Anschluss (20) zum Verbinden mit einem flüssiges CO₂ enthaltenden CO₂-Speicher (24) oder einen flüssiges CO₂ enthaltenden CO₂-Speicher (24) umfasst
und/oder
b) **dass** das Reinigungsgerät (10) einen Druckgasanschluss (52) zum Verbinden mit einer Druckgaserzeugungseinrichtung (54) oder eine Druckgaserzeugungseinrichtung (56) umfasst
und/oder
c) **dass** das Reinigungsgerät (10) eine Übergabeeinrichtung (82) zum Übergeben der CO₂-Pellets (16) in eine CO₂-Pellet-Beschleunigungseinrichtung (58) zum Beschleunigen derselben umfasst
und/oder
d) **dass** das Reinigungsgerät (10) eine CO₂-Pellet-Beschleunigungseinrichtung (58) umfasst, welche insbesondere eine mit dem Druckgasanschluss (52) oder der Druckgaserzeugungseinrichtung (56) in Fluidverbindung stehende Druckgasleitung (50; 110) umfasst.

13. Reinigungsgerät nach Anspruch 12, **dadurch gekennzeichnet,**
a) **dass** die Übergabeeinrichtung (82) und/oder die CO₂-Pellet-Beschleunigungseinrichtung (58) mindestens eine Venturi-Düse (108) umfasst
und/oder
b) **dass** die Übergabeeinrichtung (82) stromabwärts einen Strahlanschluss (62) umfasst zum Verbinden mit einer Strahlleitung (64) oder dass die Übergabeeinrichtung (82) stromabwärts mit einer Strahlleitung (64) in Fluidverbindung steht,
wobei insbesondere an einem freien Ende der Strahlleitung (64) eine Strahldüse (66) angeordnet oder ausgebildet ist.

14. Reinigungsgerät nach einem der Ansprüche 11 bis 13, **gekennzeichnet durch** einen CO₂-Pellet-Zwischenspeicher (80) zum Zwischenspeichern der erzeugten CO₂-Pellets (16).

15. Reinigungsgerät nach Anspruch 14, **dadurch gekennzeichnet, dass** der CO₂-Pellet-Zwischenspeicher (80) einerseits mit der Verdichtungseinrichtung (44) und andererseits mit der Übergabeeinrichtung (82) direkt oder indirekt in Fluidverbindung steht.

## Claims

1. Apparatus (42) for producing CO₂ pellets (16) from CO₂ snow (36), in particular, for a cleaning device (10) for spraying surfaces to be treated with a mixed stream (12) of a pressurised gas (14) and CO₂ pellets (16), comprising a compressor device (44) for compressing CO₂ snow (36) to form CO₂ pellets (16), wherein the compressor device (44) comprises a gear compressor (46; 46'), wherein the gear compressor (46; 46') comprises at least one compressor wheel (86; 86'; 142; 152; 152') which is mounted rotatable about a first rotation axis (88; 88') and has a plurality of compressing elements (96; 96'), and comprising at least one intake wheel (92; 92'; 152; 152') which has a plurality of snow intakes (98; 98'; 148) for accepting CO₂ snow (36), said snow intakes being configured corresponding to the compressing elements (96; 96'; 146), said intake wheel being mounted rotatable about a second rotation axis (90; 90') and cooperating with the at least one compressor wheel (86; 86'; 142; 152; 152'), wherein the intake wheel (92'; 152; 152') comprises an intake wheel sleeve (114) with an intake wheel sleeve wall, wherein the snow intakes (98') are arranged or formed in the intake wheel sleeve wall and wherein the snow intakes (98; 98'; 148) are configured in the form of recesses which are open in the radial direction, **characterised in that** an interior space formed by the intake wheel sleeve is configured to receive the CO₂ pellets.

2. Apparatus according to claim 1, **characterised in that**
a) the compressing elements (96; 96'; 146) are configured in the form of teeth (94; 94'; 170; 170') projecting in the radial direction from the compressor wheel (86; 86'; 142; 152; 152')
and/or
b) the device (42) comprises two or more compressor wheels (144) which are arranged offset in the circumferential direction, so that compressing element intermediate spaces (148) are delimited both in the circumferential direction and also in the axial direction by compressing elements (146),
and/or
c) the at least one compressor wheel (86; 86'; 152; 152') and the at least one intake wheel (92; 92'; 152; 152') are configured identically or substantially identically.
and/or
d) the first and second rotation axes (88; 88'; 90; 90') extend parallel or substantially parallel to one another.
and/or
e) the plurality of snow intakes (98; 98'; 148) are configured in the form of intermediate spaces arranged or formed between the plurality of compressing elements (96; 96'; 146).
and/or
f) the device (42) comprises an extruding device (84) for extruding CO₂ pellets (16).

3. Apparatus according to claim 2, **characterised in that** the extruding device (84) comprises at least one extrusion die (116) with a plurality of through openings (118; 178; 178').

4. Apparatus according to claim 3, **characterised in that**
a) each of the plurality of through openings (118; 178; 178') defines a longitudinal axis which extends in the radial, or substantially the radial direction away from the first or second rotation axis (90; 90'),
and/or
b) each snow intake (98') is in fluidic communication with at least one through opening (118; 178; 178').

5. Apparatus according to any one of the claims 1 to 4, **characterised in that**
a) the compressor wheel (86'; 152; 152') comprises a compressor wheel sleeve (112) with a compressor wheel sleeve wall and **in that** the compressing elements (96') are arranged or formed on an external side of the compressor wheel sleeve (112),
wherein in particular the compressor wheel sleeve (112) comprises an interior space (128) for receiving the CO₂ pellets,
and/or
b) the apparatus (42) comprises a drive device (100) for driving the at least one compressor wheel (86; 86'; 142; 152; 152') and/or the at least one intake wheel (92; 92'; 152; 152')
and/or
c) the apparatus (42) comprises a reservoir (38) for receiving and storing CO₂ snow (36), wherein in particular the interior space (132) of the intake wheel sleeve (114) forms the reservoir (38),
and/or
d) the apparatus (42) comprises a CO₂ connection (20) to connect to a CO₂ store (24) containing liquid CO₂ or by a CO₂ store (24) containing liquid CO₂, wherein the apparatus (42) comprises in particular an expansion device (34) in fluidic communication with the CO₂ connection (20) or the CO₂ store (24) to generate CO₂ snow (36) from liquid or gaseous CO₂,
wherein further in particular the expansion device (34) comprises an expansion nozzle (32) which is in fluidic communication with the CO₂ connection (20) or with the CO₂ store (24)
and/or
e) the apparatus (42) comprises a scraping device (122) for scraping the formed CO₂ pellets (16) off the gear compressor (46; 46').

6. Apparatus according to any one of the claims 2 to 5, **characterised in that** the scraping device (122) is configured for scraping the formed CO₂ pellets (16) off the at least one compressor wheel (86') and/or off the at least one intake wheel (92'), wherein in particular the scraping device (122; 182) comprises at least one scraping element (124; 190) which is arranged or formed in a compressor wheel sleeve interior space (128) defined by the compressor wheel sleeve (112) or in an intake wheel sleeve interior space (132) defined by the intake wheel sleeve (114) or at least partly projects into said space,
wherein further in particular the at least one scraping element (124; 190) comprises a scraping edge (126; 202) which touches or almost touches a compressor wheel sleeve inner surface (130; 206) of the compressor wheel sleeve (112) delimiting the compressor wheel sleeve interior space (128) or which touches or almost touches an intake wheel sleeve inner surface (134) of the intake wheel sleeve (114) delimiting the intake wheel sleeve interior space (132).

7. Apparatus according to any one of the claims 2 to 6, **characterised in that** the compressor device (44) has a pellet outlet (138) which, in particular, is oriented either parallel to the first or second rotation axis (88; 90) or transversely, in particular perpendicularly, to the first or second rotation axis (88'; 90').

8. Apparatus according to claim 7, **characterised in that**
a) the pellet outlet (138) is arranged or formed between the first and second rotation axis (88; 90)
and/or
b) the pellet outlet (138) is in direct or indirect fluidic communication with a CO₂ pellet intermediate store (80) for intermediate storage of the CO₂ pellets (16) generated or with a transfer device (82) for transferring the CO₂ pellets (16) to a CO₂ pellet accelerating device (58) for accelerating the pellets
and/or
c) the apparatus (42) comprises a pressure separation device (106) for providing a pressure stage between the expansion device (34) and the pellet outlet (138; 138').

9. Apparatus according to claim 8, **characterised in that** the pressure separation device (106) comprises at least one gas-tight or substantially gas-tight sealing element (140; 140') and **in that** the at least one sealing element (140; 140') is arranged between the expansion device (34) and the pellet outlet (138).

10. Apparatus according to claim 9, **characterised in that**
a) the at least one sealing element (140; 140') is formed of CO₂ snow (36), in particular compressed CO₂ snow (36),
and/or
b) the at least one sealing element (140; 140') is arranged or formed between the at least one compressor wheel (86; 86'; 152; 152') and the at least one intake wheel (92; 92'; 152; 152').

11. Cleaning device (10) for spraying surfaces to be treated with a mixed stream (12) of a pressurised gas (14) and CO₂ pellets, **characterised by** an apparatus (42) for producing CO₂ pellets (16) from CO₂ snow (36) according to any one of the preceding claims.

12. Cleaning device according to claim 11, **characterised in that**
a) the cleaning device comprises a CO₂ connection (20) to connect to a CO₂ store (24) containing liquid CO₂ or by a CO₂ store (24) containing liquid CO₂
and/or
b) the cleaning device (10) comprises a pressurised gas connection (52) for connecting to a pressurised gas generating device (54), or by a pressurised gas generating device (56)
and/or
c) the cleaning device (10) comprises a transfer device (82) for transferring the CO₂ pellets (16) to a CO₂ pellet accelerating device (58) for accelerating the pellets
and/or
d) the cleaning device (10) comprises a CO₂ pellet accelerating device (58) which comprises, in particular, a pressurised gas line (50; 110) which is in fluidic communication with the pressurised gas connection (52) or the pressurised gas generating device (56).

13. Cleaning device according to claim 12, **characterised in that**
a) the transfer device (82) and/or the CO₂ pellet accelerating device (58) comprises at least one venturi nozzle (108)
and/or
b) the transfer device (82) comprises a spray connection (62) downstream for connecting to a spray line (64) or **in that** the transfer device (82) is in fluidic communication downstream with a spray line (64), wherein in particular a jet nozzle (66) is arranged or formed at a free end of the spray line (64).

14. Cleaning device according to any one of the claims 11 to 13, **characterised by** a CO₂ pellet intermediate store (80) for intermediate storage of the CO₂ pellets (16) generated.

15. Cleaning device according to claim 14, **characterised in that** the CO₂ pellet intermediate store (80) is directly or indirectly in fluidic communication on one side with the compressor device (44) and on the other side with the transfer device (82).

## Revendications

1. Dispositif (42) pour la production de pellets de CO₂ (16) à partir de neige carbonique (36), en particulier pour un appareil de nettoyage (10) pour la projection sur des surfaces à traiter d'un flux mixte (12) d'un gaz comprimé (14) et de pellets de CO₂ (16), comprenant un dispositif de compactage (44) pour le compactage de neige carbonique (36) afin de former des pellets de CO₂ (16), ledit dispositif de compactage (44) comprenant un compacteur à roue dentée (46 ; 46'), ledit compacteur à roue dentée (46 ; 46') comprenant au moins une roue de compacteur (86 ; 86' ; 142 ; 152 ; 152') montée de manière rotative autour d'un premier axe de rotation (88 ; 88') avec une pluralité d'éléments de compactage (96 ; 96') et au moins une roue réceptrice (92 ; 92' ; 152 ; 152') coopérant avec au moins une roue de compacteur (86 ; 86' ; 142 ; 152 ; 152'), montée de manière rotative autour d'un deuxième axe de rotation (90 ; 90'), ayant une pluralité de logements à neige (98 ; 98' ; 148) formés de manière correspondante aux éléments de compactage (96 ; 96' ; 146) et destinés à recevoir de la neige carbonique (36), ladite roue réceptrice (92' ; 152 ; 152') comprenant un manchon (114) de roue réceptrice avec une paroi de manchon de roue réceptrice, les logements à neige (98') étant disposés ou formés dans la paroi de manchon de roue réceptrice et lesdits logements à neige (98 ; 98' ; 148) étant prévus sous la forme de cavités ouvertes en direction radiale, **caractérisé en ce qu'**un espace intérieur formé par le manchon de roue réceptrice est prévu pour la réception des pellets de CO₂.

2. Dispositif selon la revendication 1, **caractérisé**
a) **en ce que** les éléments de compactage (96 ; 96' ; 146) se présentent sous la forme de dents (94 ; 94' ; 170 ; 170') en saillie sur la roue de compacteur (86 ; 86' ; 142 ; 152 ; 152') dans la direction radiale,
et/ou
b) **en ce que** ledit dispositif (42) comprend au moins deux roues de compacteur (144) disposées avec décalage dans la direction circonférentielle, si bien que des interstices (148) d'éléments de compactage sont délimités par les éléments de compactage (146) dans la direction circonférentielle ainsi que dans la direction axiale,
et/ou
c) **en ce que** ladite au moins une roue de compacteur (86 ; 86' ; 152 ; 152') et ladite au moins une roue réceptrice (92 ; 92' ; 152 ; 152') sont prévues identiques ou sensiblement identiques,
et/ou
d) **en ce que** le premier et le deuxième axes de rotation (88 ; 88'; 90 ; 90') sont parallèles ou sensiblement parallèles l'un à l'autre,
et/ou
e) **en ce que** la pluralité de logements à neige (98 ; 98' ; 148) sont prévus sous forme d'interstices, disposés ou formés entre les différents éléments de compactage (96 ; 96' ; 146),
et/ou
f) **en ce que** ledit dispositif (42) comprend un dispositif d'extrusion (84) pour l'extrusion de pellets de CO₂ (16).

3. Dispositif selon la revendication 2, **caractérisé en ce que** le dispositif d'extrusion (84) comprend au moins une matrice d'extrusion (116) ayant une pluralité d'ouvertures (118 ; 178 ; 178').

4. Dispositif selon la revendication 3, **caractérisé**
a) **en ce que** chaque ouverture de la pluralité d'ouvertures (118 ; 178 ; 178') définit un axe longitudinal, qui s'étend dans la direction radiale ou sensiblement dans la direction radiale depuis le premier ou le deuxième axe de rotation (90 ; 90'),
et/ou
b) **en ce que** chaque logement à neige (98') est en liaison fluidique avec au moins une ouverture (118 ; 178 ; 178').

5. Dispositif selon l'une des revendications 1 à 4, **caractérisé**
a) **en ce que** la roue de compacteur (86' ; 152 ; 152') comprend un manchon (112) de roue de compacteur avec une paroi de manchon de roue de compacteur, et en ce que les éléments de compactage (96') sont disposés ou formés sur la face extérieure du manchon (112) de roue de compacteur,
le manchon (112) de roue de compacteur comprenant en particulier un espace intérieur (128) pour la réception des pellets de CO₂,
et/ou
b) **en ce que** ledit dispositif (42) comprend un dispositif d'entraînement (100) pour l'entraînement de ladite au moins une roue de compacteur (86 ; 86' ; 142 ; 152 ; 152') et/ou de ladite au moins une roue réceptrices (92 ; 92' ; 152 ; 152'),
et/ou
c) **en ce que** ledit dispositif (42) comprend un réservoir (38) pour la réception et le stockage de neige carbonique (36),
l'espace intérieur (132) du manchon (114) de roue réceptrice formant en particulier le réservoir (38),
et/ou
d) **en ce que** ledit dispositif (42) comprend un raccord de CO₂ (20) pour le raccordement à un réservoir de CO₂ (24) contenant du CO₂ liquide, ou comprend un réservoir de CO₂ (24) contenant du CO₂ liquide,
ledit dispositif (42) comprenant en particulier un dispositif d'expansion (34) en liaison fluidique avec le raccord de CO₂ (20) ou avec le réservoir de CO₂ (24) pour la génération de neige carbonique (36) à partir de CO₂ liquide ou gazeux,
le dispositif d'expansion (34) comprenant en outre en particulier une buse de détente (32) en liaison fluidique avec le raccord de CO₂ (20) ou avec le réservoir de CO₂ (24),
et/ou
e) **en ce que** ledit dispositif (42) comprend un dispositif racleur (122) pour le raclage des pellets de CO₂ (16) formés sur le compacteur à roue dentée (46 ; 46').

6. Dispositif selon l'une des revendications 2 à 5, **caractérisé en ce que** le dispositif racleur (122) est destiné au raclage des pellets de CO₂ (16) formés sur ladite au moins une roue de compacteur (86') et/ou sur ladite au moins une roue réceptrice (92'),
le dispositif racleur (122 ; 182) comprenant en particulier au moins un élément racleur (124 ; 190) disposé ou formé dans un espace intérieur (128) de manchon de roue de compacteur défini par le manchon (112) de roue de compacteur ou dans un espace intérieur (132) de manchon de roue réceptrice défini par le manchon (114) de roue réceptrice, ou pénétrant au moins en partie dans ceux-ci,
ledit au moins un élément racleur (124 ; 190) comprenant en outre en particulier un bord de raclage (126 ; 202), lequel contacte ou contacte presque une surface intérieure (130 ; 206) du manchon (112) de roue de compacteur délimitant l'espace intérieur (128) de manchon de roue de compacteur, ou une surface intérieure (134) du manchon (114) de roue réceptrice délimitant l'espace intérieur (132) du manchon de roue réceptrice.

7. Dispositif selon l'une des revendications 2 à 6, **caractérisé en ce que** le dispositif de compactage (44) comporte une sortie de pellets (138) orientée en particulier soit parallèlement à un premier ou un deuxième axe de rotation (88 ; 90), ou transversalement, en particulier perpendiculairement, au premier ou au deuxième axe de rotation (88' ; 90').

8. Dispositif selon la revendication 7, **caractérisé**
a) **en ce que** la sortie de pellets (138) est disposée ou formée entre le premier et le deuxième axes de rotation (88 ; 90),
et/ou
b) **en ce que** la sortie de pellets (138) est directement ou indirectement en liaison fluidique avec un réservoir-tampon de pellets de CO₂ (80) pour le stockage provisoire des pellets de CO₂ (16) produits ou avec un dispositif de transfert (82) pour le transfert des pellets de CO₂ (16) à un dispositif d'accélération (58) de pellets de CO₂ destiné à accélérer ceux-ci,
et/ou
c) **en ce que** ledit dispositif (42) comprend un dispositif de séparation sous pression (106) pour la formation d'un étage de pression entre le dispositif d'expansion (34) et la sortie de pellets (138 ; 138').

9. Dispositif selon la revendication 8, **caractérisé en ce que** le dispositif de séparation sous pression (106) comprend au moins un élément d'étanchéité (140 ; 140') étanche aux gaz ou sensiblement étanche aux gaz, et **en ce que** ledit au moins un élément d'étanchéité (140 ; 140') est disposé entre le dispositif d'expansion (34) et la sortie de pellets (138).

10. Dispositif selon la revendication 9, **caractérisé**
a) **en ce que** ledit au moins un élément d'étanchéité (140 ; 140') est constitué de neige carbonique (36), en particulier de neige carbonique (36) comprimée,
et/ou
b) **en ce que** ledit au moins un élément d'étanchéité (140 ; 140') est disposé ou formé entre ladite au moins une roue de compacteur (86 ; 86' ; 152 ; 152') et ladite au moins une roue réceptrice (92 ; 92' ; 152 ; 152').

11. Appareil de nettoyage (10) pour la projection sur des surfaces à traiter d'un flux mixte (12) d'un gaz comprimé (14) et de pellets de CO₂, **caractérisé par** un dispositif (42) pour la production de pellets de CO₂ (16) à partir de neige carbonique (36) selon l'une des revendications précédentes.

12. Appareil de nettoyage selon la revendication 11, **caractérisé**
a) **en ce que** ledit appareil de nettoyage comprend un raccord de CO₂ (20) pour le raccordement à un réservoir de CO₂ (24) contenant du CO₂ liquide, ou comprend un réservoir de CO₂ (24) contenant du CO₂ liquide,
et/ou
b) **en ce que** ledit appareil de nettoyage (10) comprend un raccord de gaz comprimé (52) pour le raccordement à un dispositif de génération de gaz comprimé (54), ou comprend un dispositif de génération de gaz comprimé (56),
et/ou
c) **en ce que** ledit appareil de nettoyage (10) comprend un dispositif de transfert (82) pour le transfert des pellets de CO₂ (16) à un dispositif d'accélération (58) de pellets de CO₂ destiné à accélérer ceux-ci,
et/ou
d) **en ce que** ledit appareil de nettoyage (10) comprend un dispositif d'accélération (58) de pellets de CO₂, lequel comprend en particulier une conduite de gaz comprimé (50 ; 110) en liaison fluidique avec le raccord de gaz comprimé (52) ou le dispositif de génération de gaz comprimé (56).

13. Appareil de nettoyage selon la revendication 12, **caractérisé**
a) **en ce que** le dispositif de transfert (82) et/ou le dispositif d'accélération (58) de pellets de CO₂ comprennent au moins une buse Venturi (108),
et/ou
b) **en ce que** le dispositif de transfert (82) comprend un raccord de jet (62) en aval pour le raccordement à une conduite de projection (64), ou en ce que le dispositif de transfert (82) est en liaison fluidique en aval avec une conduite de projection (64),
une buse de projection (66) étant en particulier disposée ou formée à une extrémité libre de la conduite de projection (64) .

14. Appareil de nettoyage selon l'une des revendications 11 à 13, **caractérisé par** un réservoir-tampon de pellets de CO₂ (80) pour le stockage provisoire des pellets de CO₂ (16) produits.

15. Appareil de nettoyage selon la revendication 14, **caractérisé en ce que** le réservoir-tampon de pellets de CO₂ (80) est directement ou indirectement en liaison fluidique avec le dispositif de compactage (44) d'une part, et avec le dispositif de transfert (82) d'autre part.
